# EUROPEAN PATENT APPLICATION

(11) **EP 4 576 009 A1**
(43) Date of publication of application: **25.06.2025**
(21) Application number: 24213872.5
(22) Date of filing: 19.11.2024
(51) Int. Cl.: G06V 10/774, G06T 17/05, G06T 19/00, G06T 19/20, G06V 10/94, G06V 20/54, G06V 20/58, G06V 20/64

(54) **METHOD FOR ANNOTATION BASED ON LIDAR MAP AND COMPUTING DEVICE USING THE SAME**

(30) Priority: 21.12.2023 KR 20230189016; 05.11.2024 KR 20240155722
(71) Applicant: Stradvision, Inc., Pohang-si 37668 (KR)
(72) Inventor: Hong, Ingee, 06754 Seoul (KR); Lee, Jinwook, 07072 Seoul (KR); Yu, Dong Kyu, 16829 Yongin-si (KR)
(74) Representative: Klunker IP Patentanwälte PartG mbB

(57) **Abstract**

A method for annotation based on a LiDAR map is provided. The method includes steps of: (a) on condition that each of datasets has been recorded in a database, in response to acquiring a specific dataset, generating a specific LiDAR map and a - specific key frame trajectory using a plurality of specific LiDAR point cloud data included in the specific dataset, wherein each of the datasets includes (1) each of LiDAR point cloud data corresponding to each of LiDAR frames and (2) each of camera images corresponding to each of camera frames, acquired by a predetermined criterion while driving each of the driving routes; and (b) allowing a specific key frame, which is at least part of a plurality of key frames included in the specific key frame trajectory, to be annotated, thereby generating an annotation result and thus recording the annotation result in the specific LiDAR map.

## Description

This present application claims the benefit of the earlier filing date of Korean provisional patent application No. 10-2023-0189016 and Korean non-provisional patent application No. 10-2024-0155722, filed on December 21, 2023 and November 5, 2024, respectively, the entire contents of which being incorporated herein by reference.

The present disclosure relates to a method for annotation based on a LiDAR map and a computing device using the same.

Annotation is a process of labelling data to generate training data such that an artificial intelligence may be trained by using the training data.

Generally, the annotation should be done per frame. Therefore, repetitive annotating processes for a same target may decrease a speed thereof and a consistency of the annotation during the repetitive annotating processes may be difficult to be achieved, which result in a problem of a difficulty in achieving an efficiency of the annotation.

Further, there is another problem in that an annotation result may be reset on a next frame depending on an annotation tool. An example of the another problem is provided in the link below:
https://www.cvat.ai/post/3d-point-cloud-annotation).

Such annotation lacking the consistency may affect training processes, and therefore, a method of achieving the consistency and fast speed of the repetitive annotating processes is required to increase an amount of the training data.

It is an object of the present disclosure to solve all the aforementioned problems.

It is still another object of the present disclosure to selectively choose key frames among all frames having been used to generate a LiDAR map and to allow an annotation on the key frames to be performed, without annotating all the frames.

It is still another object of the present disclosure to simultaneously display both each of LiDAR maps and each of camera images corresponding to each of the key frames, thereby allowing annotating processes to be performed while referring to both the LiDAR maps and their corresponding camera images.

It is still yet another object of the present disclosure to cumulatively record each of annotation data for each of objects included in the generated LiDAR map, thereby preventing repetitive annotating processes for each same object.

It is still yet another object of the present disclosure to generate an annotated LiDAR map where each of the objects included in the LiDAR map is annotated, thereby managing all the annotation data in the annotated LiDAR map.

In accordance with one aspect of the present disclosure, there is provided a method for annotation based on a LiDAR map, including steps of: (a) on condition that each of datasets for each of driving routes has been recorded in a database, in response to acquiring a specific dataset among the datasets, generating, by a computing device, a specific LiDAR map and a specific key frame trajectory using a plurality of specific LiDAR point cloud data included in the specific dataset, wherein each of the datasets includes (1) each of LiDAR point cloud data corresponding to each of LiDAR frames and (2) each of camera images corresponding to each of camera frames, acquired by a predetermined criterion while driving each of the driving routes; and (b) allowing, by the computing device, a specific key frame, which is at least part of a plurality of key frames included in the specific key frame trajectory, to be annotated, thereby generating an annotation result and thus recording the annotation result in the specific LiDAR map.

As one example, at the step of (a), the computing device selects at least part of a plurality of specific LiDAR frames as the plurality of key frames by referring to each location information of the plurality of specific LiDAR frames corresponding to the plurality of specific LiDAR point cloud data, and generates the key frame trajectory to be a path moving along the plurality of key frames.

As one example, at the step of (a), the computing device, for each of the specific LiDAR frames, performs at least one of sub-processes of: (i) determining whether a distance between a k-th point corresponding to a k-th specific LiDAR frame and a (k+1)-th point corresponding to a (k+1)-th specific LiDAR frame exceeds a preset threshold distance, and (ii) determining whether a pose change rate between a k-th pose corresponding to the k-th specific LiDAR frame and a (k+1)-th pose corresponding to the (k+1)-th specific LiDAR frame exceeds a present threshold pose change rate, to thereby select the plurality of key frames.

As one example, the step of (b) includes steps of: (b1) the computing device allowing a t-th key frame among the plurality of key frames that are part of the specific key frame trajectory to be selected as the specific key frame; (b2) in response to selecting the t-th key frame, the computing device instructing a display device to display a t-th LiDAR map and one or more t-th camera images corresponding to location information of the t-th key frame; (b3) the computing device allowing a t-th annotating process on said at least part of a plurality of objects included in the t-th LiDAR map to be performed by referring to at least one of the t-th LiDAR map and the t-th camera images; and (b4) the computing device converting coordinates of a t-th annotation result into coordinates of the t-th LiDAR map, to thereby generate a converted t-th annotation result and record the converted t-th annotation result in the specific LiDAR map.

As one example, at the step of (b3), in response to selecting a t-th object among the plurality of objects, the computing device generates a (t_1)-st annotation box with a certain range based on the t-th object, and then instructs the display device to display the (t_1)-st annotation box, to thereby allow the t-th annotating process on the t-th object to be performed.

As one example, the computing device displays a (t_2)-nd annotation box corresponding to the (t_1)-st annotation box by projecting the (t_2)-nd annotation box on a region of the t-th camera image corresponding to a range of coordinates of the t-th LiDAR map where the (t_1)-st annotation box is located, wherein the computing device allows a second shape of the (t_2)-nd annotation box to be changed according to a change in a first shape of the (t_1)-st annotation box by referring to a relation between a (t_1)-st shooting angular range of the t-th LiDAR map and a (t_2)-nd shooting angular range of the t-th camera image.

As one example, in response to selecting the t-th object among the plurality of objects, the computing device instructs the display device to further display a detailed area in which at least one of a planar portion, a side portion, and a front portion of the t-th object is enlarged, wherein the computing device generates at least one (t_3)-rd annotation box in which at least one of a planar portion, a side portion and a front portion of the (t_1)-st annotation box is enlarged and instructs the display device to display the (t_3)-rd annotation box through the detailed area.

As one example, after the step (b4), the step of (b) includes steps of: (b5) in response to selecting a (t+1)-th key frame, the computing device converting coordinates of the t-th annotation result, having been converted into coordinates of the t-th LiDAR map, into coordinates of the (t+1)-th LiDAR map, thereby generating a converted t-th annotation result, and then applying the converted t-th annotation result to the (t+1)-th LiDAR map, and instructing the display device to (1) display the (t+1)-th LiDAR map with the t-th annotation result applied thereto and (2) display the t-th annotation result on one or more (t+1)-th camera images by referring to a matching relation between the (t+1)-th LiDAR map and the (t+1)-th camera images; (b6) the computing device allowing a (t+1)-th annotating process on said at least part of a plurality of objects included in the (t+1)-th LiDAR map to be performed by referring to at least one of the (t+1)-th LiDAR map and the (t+1)-th camera images; and (b7) the computing device converting coordinates of a (t+1)-th annotation result into coordinates of the (t+1)-th LiDAR map, to thereby generate a converted (t+1)-th annotation result and record the converted (t+1)-th annotation result in the specific LiDAR map.

As one example, at the step of (a), the computing device generates the specific LiDAR map by applying a LiDAR SLAM algorithm to the plurality of specific LiDAR point cloud data.

As one example, at the step of (a), each of the specific LiDAR frames corresponding to each of the specific LiDAR point cloud data is associated with each of location information of the plurality of specific LiDAR frames, wherein the location information includes information on 6-DOF (6 degrees of freedom).

In accordance with another aspect of the present disclosure, there is provided a computing device for annotation based on a LiDAR map, including: at least one memory that stores instructions; and at least one processor configured to execute the instructions to perform processes of: (I) on condition that each of datasets for each of driving routes has been recorded in a database, in response to acquiring a specific dataset among the datasets, generating a specific LiDAR map and a specific key frame trajectory using a plurality of specific LiDAR point cloud data included in the specific dataset, wherein each of the datasets includes (1) each of LiDAR point cloud data corresponding to each of LiDAR frames and (2) each of camera images corresponding to each of camera frames, acquired by a predetermined criterion while driving each of the driving routes; and (II) allowing a specific key frame, which is at least part of a plurality of key frames included in the specific key frame trajectory, to be annotated, thereby generating an annotation result and thus recording the annotation result in the specific LiDAR map.

As one example, at the process of (I), the processor selects at least part of a plurality of specific LiDAR frames as the plurality of key frames by referring to each location information of the plurality of specific LiDAR frames corresponding to the plurality of specific LiDAR point cloud data, and generates the key frame trajectory to be a path moving along the plurality of key frames.

As one example, at the process of (I), the processor, for each of the specific LiDAR frames, performs at least one of sub-processes of: (i) determining whether a distance between a k-th point corresponding to a k-th specific LiDAR frame and a (k+1)-th point corresponding to a (k+1)-th specific LiDAR frame exceeds a preset threshold distance, and (ii) determining whether a pose change rate between a k-th pose corresponding to the k-th specific LiDAR frame and a (k+1)-th pose corresponding to the (k+1)-th specific LiDAR frame exceeds a present threshold pose change rate, to thereby select the plurality of key frames.

As one example, wherein the process of (II) includes processes of: (II-1) the processor allowing a t-th key frame among the plurality of key frames that are part of the specific key frame trajectory to be selected as the specific key frame; (II-2) in response to selecting the t-th key frame, the processor instructing a display device to display a t-th LiDAR map and one or more t-th camera images corresponding to location information of the t-th key frame; (II-3) the processor allowing a t-th annotating process on said at least part of a plurality of objects included in the t-th LiDAR map to be performed by referring to at least one of the t-th LiDAR map and the t-th camera images; and (II-4) the processor converting coordinates of a t-th annotation result into coordinates of the t-th LiDAR map, to thereby generate a converted t-th annotation result and record the converted t-th annotation result in the specific LiDAR map.

As one example, at the process of (II-3), in response to selecting a t-th object among the plurality of objects, the processor generates a (t_1)-st annotation box with a certain range based on the t-th object, and then instructs the display device to display the (t_1)-st annotation box, to thereby allow the t-th annotating process on the t-th object to be performed.

As one example, the processor displays a (t_2)-nd annotation box corresponding to the (t_1)-st annotation box by projecting the (t_2)-nd annotation box on a region of the t-th camera image corresponding to a range of coordinates of the t-th LiDAR map where the (t_1)-st annotation box is located, wherein the processor allows a second shape of the (t_2)-nd annotation box to be changed according to a change in a first shape of the (t_1)-st annotation box by referring to a relation between a (t_1)-st shooting angular range of the t-th LiDAR map and a (t_2)-nd shooting angular range of the t-th camera image.

As one example, in response to selecting the t-th object among the plurality of objects, the processor instructs the display device to further display a detailed area in which at least one of a planar portion, a side portion, and a front portion of the t-th object is enlarged, wherein the processor generates at least one (t_3)-rd annotation box in which at least one of a planar portion, a side portion and a front portion of the (t_1)-st annotation box is enlarged and instructs the display device to display the (t_3)-rd annotation box through the detailed area.

As one example, after the process (II-4), the process of (II) includes processes of: (II-5) in response to selecting a (t+1)-th key frame, the processor converting coordinates of the t-th annotation result, having been converted into coordinates of the t-th LiDAR map, into coordinates of the (t+1)-th LiDAR map, thereby generating a converted t-th annotation result, and then applying the converted t-th annotation result to the (t+1)-th LiDAR map, and instructing the display device to (1) display the (t+1)-th LiDAR map with the t-th annotation result applied thereto and (2) display the t-th annotation result on one or more (t+1)-th camera images by referring to a matching relation between the (t+1)-th LiDAR map and the (t+1)-th camera images; (II-6) the processor allowing a (t+1)-th annotating process on said at least part of a plurality of objects included in the (t+1)-th LiDAR map to be performed by referring to at least one of the (t+1)-th LiDAR map and the (t+1)-th camera images; and (II-7) the processor converting coordinates of a (t+1)-th annotation result into coordinates of the (t+1)-th LiDAR map, to thereby generate a converted (t+1)-th annotation result and record the converted (t+1)-th annotation result in the specific LiDAR map.

As one example, at the process of (I), the processor generates the specific LiDAR map by applying a LiDAR SLAM algorithm to the plurality of specific LiDAR point cloud data.

As one example, at the process of (I), each of the specific LiDAR frames corresponding to each of the specific LiDAR point cloud data is associated with each of location information of the plurality of specific LiDAR frames, wherein the location information includes information on 6-DOF (6 degrees of freedom).

The above and other objects and features of the present disclosure will become apparent from the following description of preferred embodiments given in conjunction with the accompanying drawings.

The following drawings to be used to explain example embodiments of the present disclosure are only part of example embodiments of the present disclosure and other drawings can be obtained based on the drawings by those skilled in the art of the present disclosure without inventive work.
Fig. 1 is a drawing schematically illustrating a computing device for annotation based on a LiDAR map in accordance with one example embodiment of the present disclosure.
Fig. 2 is a drawing schematically illustrating a method of annotation based on the LiDAR map in accordance with one example embodiment of the present disclosure.
Figs. 3A and 3B are drawings schematically illustrating a generated LiDAR map and a generated key frame trajectory in accordance with one example embodiment of the present disclosure.
Fig. 4 is a drawing schematically illustrating a detailed method of annotation in accordance with one example embodiment of the present disclosure.
Figs. 5A, 5B, 5C, and 5D are drawings schematically illustrating examples of the method of annotation by using the computing device in accordance with one example embodiment of the present disclosure.
Figs. 6A and 6B are drawings schematically illustrating other examples of the method of annotation by using the computing device in accordance with another example embodiment of the present disclosure.

Detailed explanation on the present disclosure to be made below refer to attached drawings and diagrams illustrated as specific embodiment examples under which the present disclosure may be implemented to make clear of purposes, technical solutions, and advantages of the present disclosure. These embodiments are described in sufficient detail to enable those skilled in the art to practice the disclosure. Moreover, the present disclosure covers all possible combinations of example embodiments indicated in this specification. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

To allow those skilled in the art to the present disclosure to be carried out easily, the example embodiments of the present disclosure by referring to attached drawings will be explained in detail as shown below.

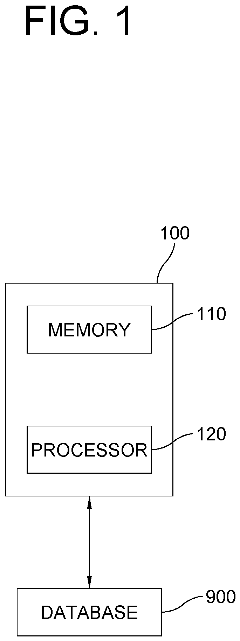

Fig. 1 is a drawing schematically illustrating a computing device for annotation based on a LiDAR map in accordance with one example embodiment of the present disclosure.

By referring to Fig. 1, the computing device 100 may include at least one memory 110 for storing instructions and a processor 120 for processing the instructions for the annotation based on the LiDAR map. Herein, the computing device 100 may be a PC (Personal Computer) or a mobile device, etc.

Specifically, the computing device 100 may typically achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

Also, the processors of such devices may include hardware configuration of MPU (Micro Processing Unit) or CPU (Central Processing Unit), cache memory, data bus, etc. Additionally, the computing device may further include operating system (OS) and software configuration of applications that achieve specific purposes.

Such description of the computing device does not exclude an integrated device including any combination of a processor, a memory, a medium, or any other computing components for implementing the present disclosure.

Moreover, the computing device 100 may communicate with a database 900 which stores information required for performing processes of the annotation based on the LiDAR map. Herein, the database 900 may include at least part of a flash memory type, a hard disk type, a multimedia card micro type, a card memory (such as SD or XD memory), RAM (Random Access Memory), SRAM (Statis Random Access Memory), ROM (ReadOnly Memory), EEPROM (Electrically Erasable Programmable ReadOnly Memory), PROM (Programmable ReadOnly Memory), magnetic memory, magnetic disk memory, and optical disk. Further, depending on an operating condition of the present disclosure, the database 900 may be installed separately from the computing device 100, or may be installed within the computing device 100 to transmit and record data, and may also be implemented separately into two or more DBs, contrary to the illustration.

Additionally, the computing device 100 may communicate with a display device (not illustrated) capable of displaying at least part of processes of annotation based on the LiDAR map.

A method using the computing device 100 for the annotation based on the LiDAR map in accordance with one example embodiment of the present disclosure is as follows.

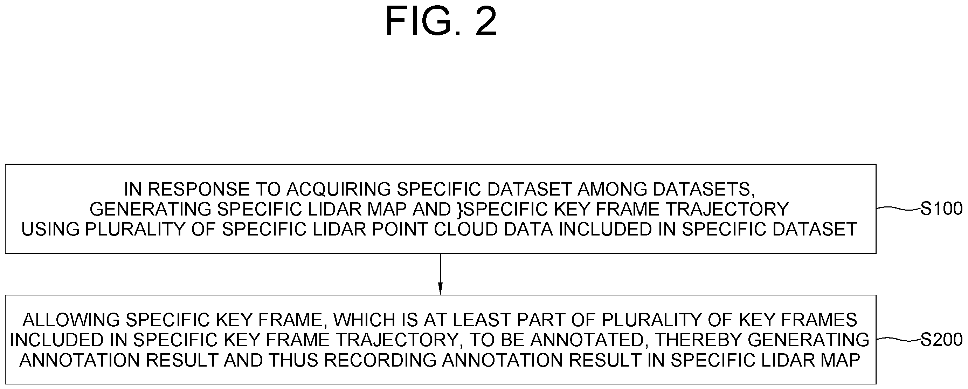

Fig. 2 is a drawing schematically illustrating a method of annotation based on the LiDAR map in accordance with one example embodiment of the present disclosure.

First, on condition that each of datasets for each of driving routes has been recorded in the database 900, in response to selecting a specific dataset among the datasets, the computing device 100 may generate a specific LiDAR map and a specific key frame trajectory by using a plurality of specific LiDAR point cloud data included in the specific dataset, at a step of S100. Afterwards, the computing device 100 may allow a specific key frame, which is at least part of a plurality of key frames included in the specific key frame trajectory, to be annotated, thereby generating an annotation result and thus recording the annotation result in the specific LiDAR map, at a step of S200. Further details will be explained below.

### LiDAR map and key frame trajectory generation

Details of a method of generating the LiDAR map and the specific key frame trajectory at the step S100 is as below.

First, the computing device 100 may acquire a specific dataset among each of the datasets recorded in the database 900.

Herein, the database 900 may manage each of the datasets for each of the driving routes. And each of the datasets may include (1) each of LiDAR point cloud data corresponding to each of LiDAR frames and (2) each of camera images corresponding to each of camera frames, acquired according to at least one predetermined criterion by a LiDAR and a camera mounted on a vehicle driven along each of the driving routes.

Herein, the predetermined criterion may be taking images at every preset period or taking images at every preset distance traveled, but it is not limited thereto.

Also, since the LiDAR point cloud data are 3D (3-Dimensional) data and the camera images are 2D (2-Dimensional) data, the LiDAR and the cameras may be calibrated with each other in order to match the coordinates therebetween.

Further, the computing device 100 may generate a specific LiDAR map and a specific key frame trajectory by using the plurality of specific LiDAR point cloud data included in the specific dataset.

Herein, the computing device 100 may generate the specific LiDAR map by applying a LiDAR SLAM (Simultaneous Localization and Mapping) algorithm to the plurality of specific LiDAR point cloud data.

Herein, the LiDAR SLAM algorithm may include ICP (Interactive Closet Point) algorithm, and HDL GRAPH SLAM algorithm, but it is not limited thereto.

Further, the computing device 100 may generate the specific LiDAR map by additionally using at least part of GPS sensor data and IMU sensor data acquired from a GPS sensor and an IMU sensor installed on the vehicle, to thereby increase a quality of the specific LiDAR map.

Herein, if the LiDAR map is generated by using the GPS sensor data, even in case at least part of dates/times of acquiring the LiDAR data and the camera images and surroundings of the LiDAR data and the camera images are changed, the LiDAR data and the camera images having already been acquired can be re-used.

Furthermore, the computing device 100 may select at least part of the plurality of specific LiDAR frames as the plurality of key frames by referring to each location information of the plurality of specific LiDAR frames corresponding to the plurality of specific LiDAR point cloud data, and generate the key frame trajectory to be a path moving along the plurality of key frames.

Herein, for each of the specific LiDAR frames, the computing device 100 may perform at least one of sub-processes of: (i) determining whether a distance between a k-th point corresponding to a k-th specific LiDAR frame and a (k+1)-th point corresponding to a (k+1)-th specific LiDAR frame exceeds a preset threshold distance, and (ii) determining whether a pose change rate between a k-th pose corresponding to the k-th specific LiDAR frame and a (k+1)-th pose corresponding to the (k+1)-th specific LiDAR frame exceeds a present threshold pose change rate, to thereby select the plurality of key frames. For instance, when selecting the plurality of key frames, they may be selected such that positions where the plurality of key frames are acquired are not too close to each other and such that a degree of similarity on poses between the plurality of key frames is not too high.

Moreover, each of the specific LiDAR frames may be associated with each of location information of the plurality of specific LiDAR frames, and the location information may include information on 6-DOF (i.e., Six degrees of freedom) which is information on X, Y, Z, Roll, Pitch and Yaw.

For example, the location information may include information on a point and a pose of the vehicle on the specific LiDAR map, or may be a point and a pose of the LiDAR on the LiDAR map, but it is not limited thereto. Herein, the point may mean a position of the 6-DOF and the pose may mean an orientation of the 6-DOF, but they are not limited thereto.

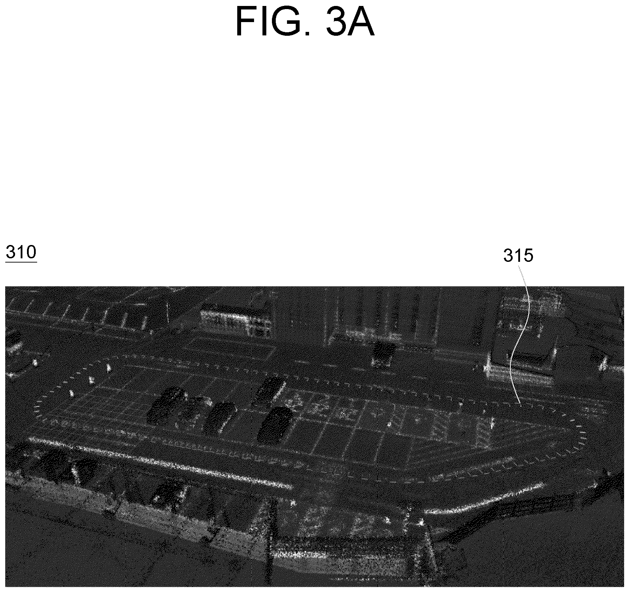

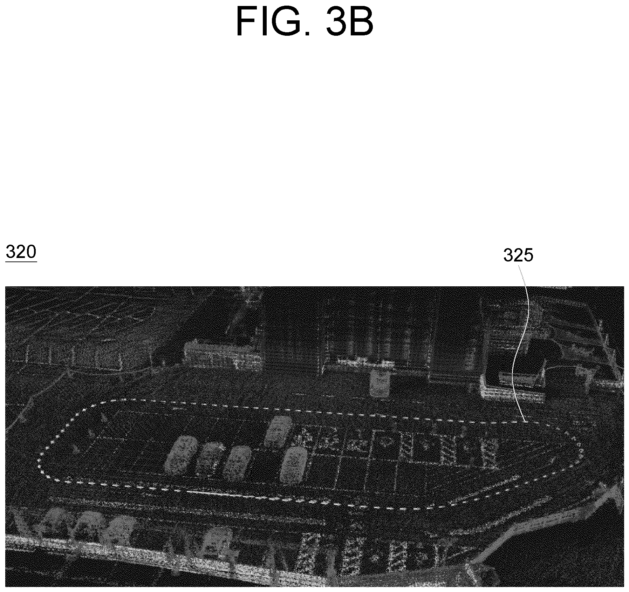

Figs. 3A and 3B are drawings schematically illustrating the LiDAR map and the key frame trajectory in accordance with one example embodiment of the present disclosure.

As illustrated in Figs. 3A and 3B, the computing device 100 may allow the specific key frame trajectory 315 and 325 to be displayed on the specific LiDAR map 310 and 320, but it is not limited thereto.

### Annotation

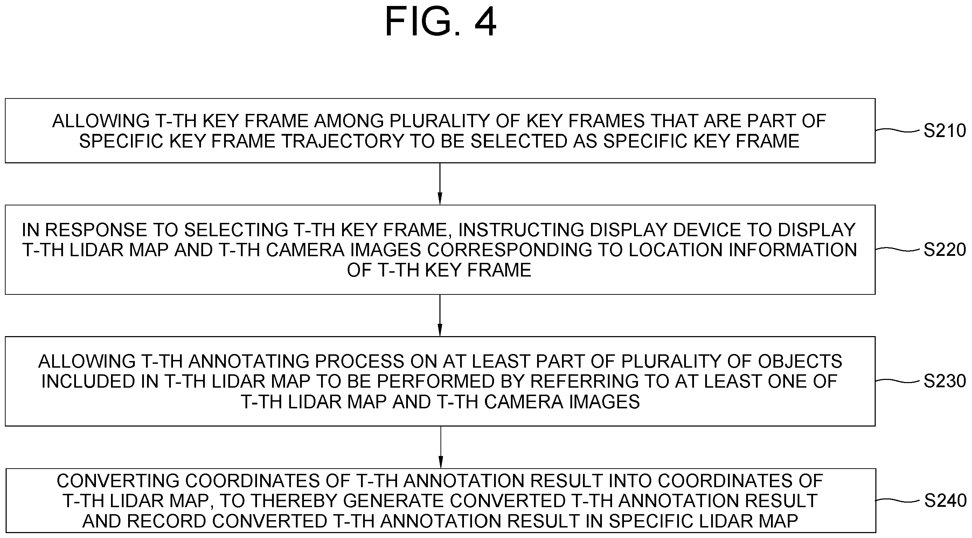

Fig. 4 is a drawing schematically illustrating a detailed method of annotating at least part of the specific key frame among the plurality of key frames included in the specific key frame trajectory, and then recording annotated results in the specific LiDAR map, at the step S200, in accordance with one example embodiment of the present disclosure.

By referring to Fig. 4, the computing device 100 may select a t-th key frame as the specific key frame from the plurality of key frames included in the specific key frame trajectory, at a step of S210.

Herein, t is an integer greater than or equal to 1 and smaller than or equal to n, and n is the number of the key frames.

Further, in response to selecting the t-th key frame, the computing device 100 may instruct the display device to allow a t-th LiDAR map and one or more t-th camera image corresponding to location information of the t-th key frame to be displayed, at a step of S220.

Next, the computing device 100 may allow a t-th annotating process on said at least part of a plurality of objects included in the t-th LiDAR map to be performed by referring to at least one of the t-th LiDAR map and the t-th camera image, at a step of S230.

Herein, in response to selecting a t-th object among the plurality of objects, the computing device 100 may generate a (t_1)-st annotation box with a certain range based on the t-th object, and then instruct the display device to display the (t_1)-st annotation box, to thereby allow the t-th annotating process on the t-th object to be performed.

For example, if the t-th object is a vehicle with a 3D volume, then a 3D bounding box with a shape of a cuboid capable of including the vehicle therein may be generated and displayed, thereby allowing the t-th annotating process to be performed, and if the object is a parking slot with a 2D region, then a 2D bounding box capable of including the parking slot therein may be generated and displayed as the (t_1)-st annotation box, thereby allowing the t-th annotating process to be performed, but it is not limited thereto. It is to be appreciated that a shape of the bounding box of the present disclosure may include any quadrangle shape such as variations of a rectangle.

Herein, the computer device 100 may allow intermediate data and/or result data of the t-th annotating process performed on the t-th object included in the t-th LiDAR map to be projected onto its corresponding t-th camera image.

Specifically, the computing device 100 may display a (t_2)-nd annotation box corresponding to the (t_1)-st annotation box by projecting the (t_2)-nd annotation box on a region of the t-th camera image corresponding to a range of coordinates of the t-th LiDAR map where the (t_1)-st annotation box is located.

Herein, the computing device 100 may allow a second shape of the (t_2)-nd annotation box to be changed according to a change in a first shape of the (t_1)-st annotation box by referring to a relation between a (t_1)-st shooting angular range of the t-th LiDAR map and a (t_2)-nd shooting angular range of the t-th camera image.

Further, in response to selecting the t-th object among the plurality of objects, the computing device 100 may instruct the display device to further display a detailed area in which at least one of a planar portion, a side portion, and a front portion of the t-th object is enlarged.

Herein, the computing device 100 may generate at least one (t_3)-rd annotation box in which at least one of a planar portion, a side portion and a front portion of the (t_1)-th annotation box is enlarged and instruct the display device to display the (t_3)-rd annotation box through the detailed area.

Next, the computing device 100 may convert coordinates of a t-th annotation result into coordinates of the t-th LiDAR map, to thereby generate a converted t-th annotation result and record the converted t-th annotation result on the specific LiDAR map, at a step of S240.

Herein, the specific LiDAR map may include each of a first LiDAR map to an n-th LiDAR map corresponding to location information of each of a first key frame to an n-th key frame.

Therefore, at the step of S240, recording on the specific LiDAR map may mean that the converted t-th annotation result is recorded on the specific LiDAR map itself, or that the converted t-th annotation result is recorded on the t-th LiDAR map included in the specific LiDAR map, but it is not limited thereto.

Meanwhile, after the step of S240, the computing device 100 may allow a (t+1)-th key frame among the plurality of key frames included in the key frame trajectory to be selected as the specific key frame.

Further, in response to selecting the (t+1)-th key frame, the computing device 100 may convert coordinates of the t-th annotation result, having been converted into coordinates of the t-th LiDAR map, into coordinates of the (t+1)-th LiDAR map, thereby generating a converted t-th annotation result, and then apply the converted t-th annotation result to the (t+1)-th LiDAR map. Thereafter, the computing device 100 may instruct the display device to (1) display the (t+1)-th LiDAR map with the converted t-th annotation result applied thereto and (2) display the converted t-th annotation result on one or more (t+1)-th camera images by referring to a matching relation between the (t+1)-th LiDAR map and the (t+1)-th camera images;

Next, the computing device 100 may allow a (t+1)-th annotating process on said at least part of a plurality of objects included in the (t+1)-th LiDAR map to be performed by referring to at least one of the (t+1)-th LiDAR map and the (t+1)-th camera images.

Herein, a (t+1)-th object to be annotated by performing the (t+1)-th annotating process may be a new object that was not included in the first annotating process to the t-th annotating process that were performed previously, but it is not limited thereto.

Next, the computing device 100 may convert coordinates of a (t+1)-th annotation result into coordinates of the (t+1)-th LiDAR map, to thereby generate a converted (t+1)-th annotation result and record the converted (t+1)-th annotation result on the specific LiDAR map.

As such, the computing device 100 may allow the first annotating process to the n-th annotating process to be performed on the first key frame to the n-th key frame, and may cumulatively record all annotated results on the specific LiDAR map, thereby acquiring annotated LiDAR map where the plurality of objects included in the specific LiDAR map are completely annotated, and thus allowing management of all the annotated objects on the single LiDAR map.

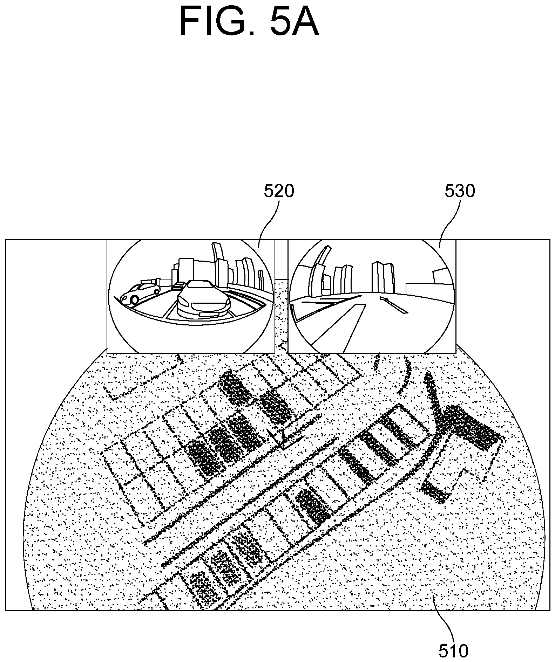

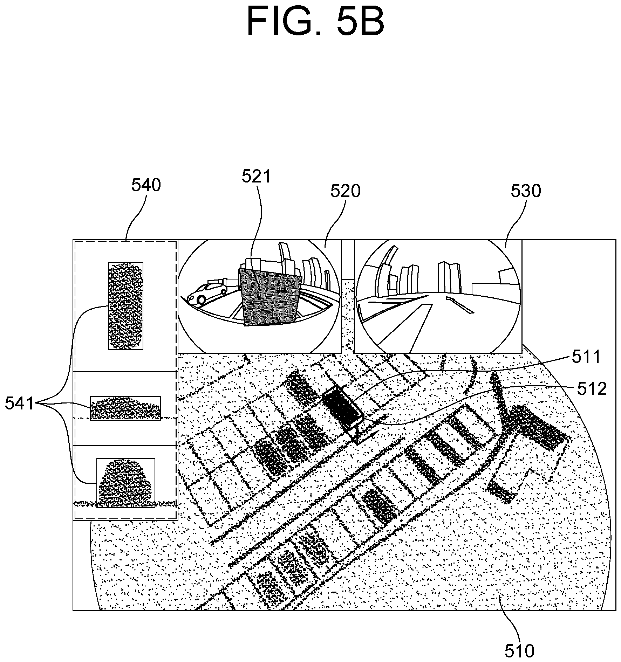

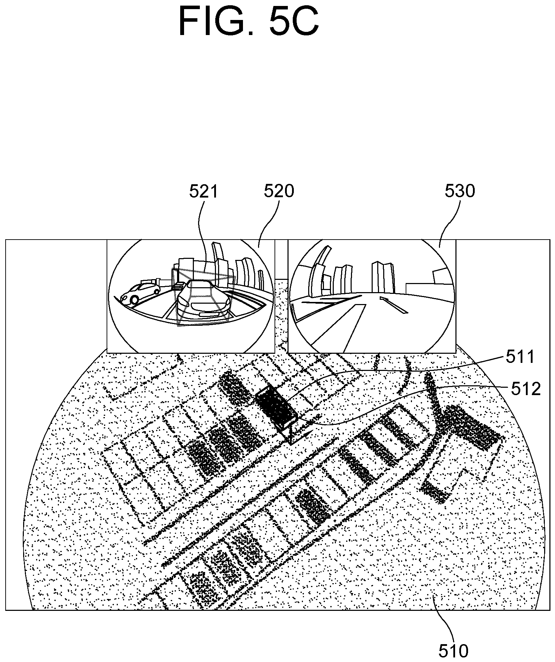

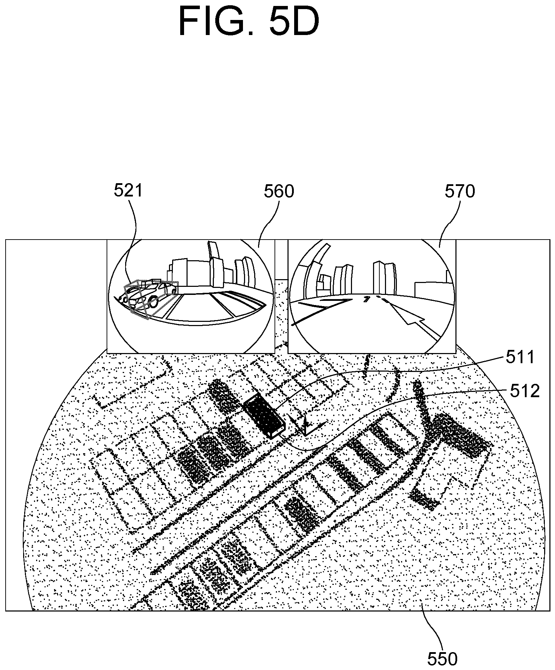

For example, by referring to Figs. 5A to 5D, the annotation method will be exemplarily explained in detail. On the assumption that the t-th key frame is selected, the computing device 100 may allow the t-th LiDAR map 510 and the t-th camera images 520 and 530 corresponding to the location information of the t-th key frame to be displayed, as illustrated in Fig. 5A. Herein, it is assumed that the t-th LiDAR map 510 and the t-th camera image 520 and 530 do not include previous annotation result. Afterwards, as shown in Fig. 5B, in response to selecting a specific vehicle 511 as the t-th object among the plurality of objects included in the t-th LiDAR map 510, the computing device 100 may generate a 3D bounding box 512 in the shape of a cuboid as the (t_1)-st annotation box with a certain range based on the specific vehicle 511, and allow the 3D bounding box 512 to be displayed on the t-th LiDAR map. Herein, an annotation box 521 corresponding to the 3D bounding box 512 may be projected as the (t_2)-nd annotation box on the t-th camera image 520 corresponding to a range of coordinates of the 3D bounding box 512 on the t-th LiDAR map 510. For reference, the annotation box 521 is shown to be opaque in Fig. 5B, but it is not limited thereto. Moreover, the computing device 100 may allow a detailed area 540 in which each of a planar portion, a side portion, and a front portion of the specific vehicle 511 is enlarged to be additionally displayed, and may allow an annotation box 541, generated as the (t_3)-rd annotation box by enlarging each of a planar portion, a side portion, and a front portion of the 3D bounding box 512, to be displayed for each of different directions through the detailed area 540, thereby allowing an accuracy of the annotating processes to be increased. Next, as shown in Fig. 5C, upon the completion of the t-th annotating process by fitting the 3D bounding box 512 to the specific vehicle 511, i.e., by setting the 3D bounding box 512 capable of circumscribing a rectangular about the specific vehicle 511, the computing device 100 may record the converted t-th annotation result (acquired by converting coordinates of the t-th annotation result of the specific vehicle 511 into coordinates of the t-th LiDAR map 510). Herein, while the 3D bounding box 512 is shown as fitted on the t-th LiDAR map 510, the annotation box 521 corresponding to the 3D bounding box 512 is also expressed on the t-th camera image 520 as a 3D bounding box. Afterwards, on the assumption that the (t+1)-th key frame is selected, the computing device 100 may convert coordinates of the t-th annotation result into coordinates of a (t+1)-th LiDAR map 550, thereby generating the converted (t+1)-th annotation result and then applying the converted (t+1)-th annotation result to the (t+1)-th LiDAR map 550. Accordingly, the computing device 100 may display the 3D bounding box 512 fitted to the specific vehicle 511 (i.e., the t-th annotation result) on the (t+1)-th LiDAR map 550 and allow the annotation box 521 corresponding to the 3D bounding box 512 to be displayed on the (t+1)-th camera image 560.

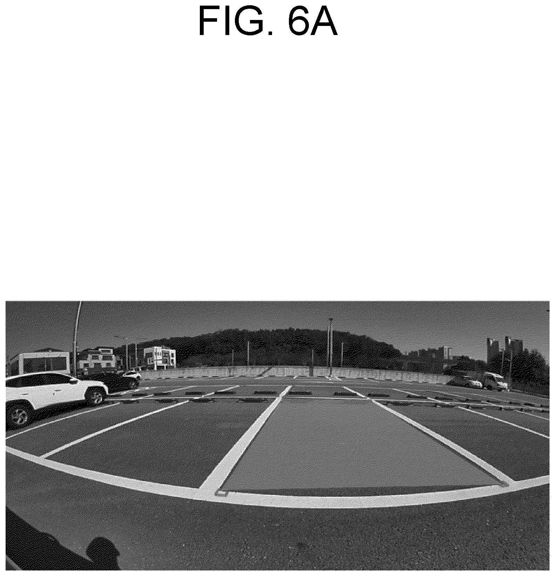

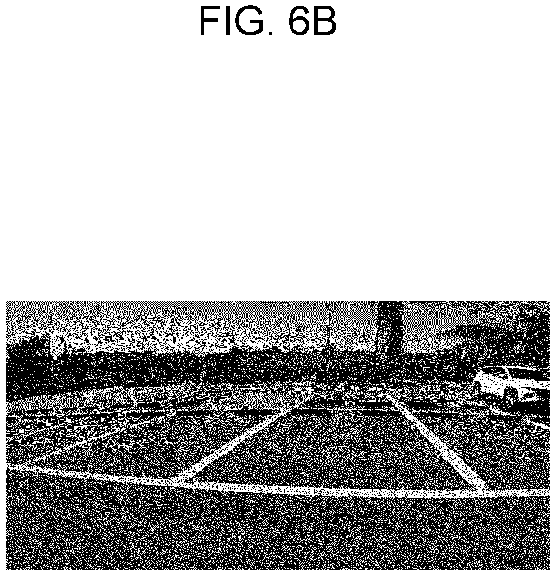

As another example, by referring to Figs. 6A and 6B, in case a (7_2)-nd annotation box shown as a light grey area on a seventh camera image has been recorded as a seventh annotation result of a parking slot in a seventh key frame as illustrated in Fig. 6A, the seventh annotation result is shown as the (7_2)-nd annotation box in light grey is also displayed in a 51-st camera image corresponding to location information of a 51-st key frame, as illustrated in Fig. 6B.

The present disclosure has an effect of selectively choosing key frames among all the frames having been used to generate the LiDAR map and allowing an annotation on the key frames, without annotating all the frames.

The present disclosure has another effect of simultaneously displaying both each of the LiDAR maps and each of the camera images corresponding to each of the key frames, thereby allowing each of the annotating processes to be performed while referring to both each of the LiDAR maps and its corresponding camera images.

The present disclosure has still another effect of cumulatively recording each of annotation data for each of the objects included in the generated LiDAR map, thereby preventing repetitive annotating processes for each same object.

The present disclosure has still yet another effect of generating an annotated LiDAR map where each of the objects included in the LiDAR map is annotated, thereby managing all the annotation data in the annotated LiDAR map.

The embodiments of the present disclosure as explained above can be implemented in a form of executable program command through a variety of computer means recordable to computer readable media. The computer readable media may include solely or in combination, program commands, data files, and data structures. The program commands recorded to the media may be components specially designed for the present disclosure or may be usable to a skilled human in a field of computer software. Computer readable media include magnetic media such as hard disk, floppy disk, and magnetic tape, optical media such as CD-ROM and DVD, magneto-optical media such as floptical disk and hardware devices such as ROM, RAM, and flash memory specially designed to store and carry out program commands. Program commands include not only a machine language code made by a compiler but also a high level language code that can be executed by a computer using an interpreter, etc. The hardware device can work as more than a software module to perform the process in accordance with the present disclosure and they can do the same in the opposite case.

As seen above, the present disclosure has been explained by specific matters such as detailed components, limited embodiments, and drawings. They have been provided only to help more general understanding of the present disclosure. It, however, will be understood by those skilled in the art that various changes and modification may be made from the description without departing from the spirit and scope of the disclosure as defined in the following claims.

Accordingly, the thought of the present disclosure must not be confined to the explained embodiments, and the following patent claims as well as everything including variations equal or equivalent to the patent claims pertain to the category of the thought of the present disclosure.

## Claims

1. A method for annotation based on a LiDAR map, comprising steps of:
(a) on condition that each of datasets for each of driving routes has been recorded in a database, in response to acquiring a specific dataset among the datasets, generating, by a computing device, a specific LiDAR map and a specific key frame trajectory using a plurality of specific LiDAR point cloud data included in the specific dataset, wherein each of the datasets includes (1) each of LiDAR point cloud data corresponding to each of LiDAR frames and (2) each of camera images corresponding to each of camera frames, acquired by a predetermined criterion while driving each of the driving routes; and
(b) allowing, by the computing device, a specific key frame, which is at least part of a plurality of key frames included in the specific key frame trajectory, to be annotated, thereby generating an annotation result and thus recording the annotation result in the specific LiDAR map.

2. The method of claim 1, wherein, at the step of (a), the computing device selects at least part of a plurality of specific LiDAR frames as the plurality of key frames by referring to each location information of the plurality of specific LiDAR frames corresponding to the plurality of specific LiDAR point cloud data, and generates the key frame trajectory to be a path moving along the plurality of key frames.

3. The method of claim 2, wherein, at the step of (a), the computing device, for each of the specific LiDAR frames, performs at least one of sub-processes of: (i) determining whether a distance between a k-th point corresponding to a k-th specific LiDAR frame and a (k+1)-th point corresponding to a (k+1)-th specific LiDAR frame exceeds a preset threshold distance, and (ii) determining whether a pose change rate between a k-th pose corresponding to the k-th specific LiDAR frame and a (k+1)-th pose corresponding to the (k+1)-th specific LiDAR frame exceeds a present threshold pose change rate, to thereby select the plurality of key frames.

4. The method of claim 1, wherein the step of (b) includes steps of:
(b1) the computing device allowing a t-th key frame among the plurality of key frames that are part of the specific key frame trajectory to be selected as the specific key frame;
(b2) in response to selecting the t-th key frame, the computing device instructing a display device to display a t-th LiDAR map and one or more t-th camera images corresponding to location information of the t-th key frame;
(b3) the computing device allowing a t-th annotating process on said at least part of a plurality of objects included in the t-th LiDAR map to be performed by referring to at least one of the t-th LiDAR map and the t-th camera images; and
(b4) the computing device converting coordinates of a t-th annotation result into coordinates of the t-th LiDAR map, to thereby generate a converted t-th annotation result and record the converted t-th annotation result in the specific LiDAR map.

5. The method of Claim 4, wherein, at the step of (b3), in response to selecting a t-th object among the plurality of objects, the computing device generates a (t_1)-st annotation box with a certain range based on the t-th object, and then instructs the display device to display the (t_1)-st annotation box, to thereby allow the t-th annotating process on the t-th object to be performed.

6. The method of claim 5, wherein the computing device displays a (t_2)-nd annotation box corresponding to the (t_1)-st annotation box by projecting the (t_2)-nd annotation box on a region of the t-th camera image corresponding to a range of coordinates of the t-th LiDAR map where the (t_1)-st annotation box is located, wherein the computing device allows a second shape of the (t_2)-nd annotation box to be changed according to a change in a first shape of the (t_1)-st annotation box by referring to a relation between a (t_1)-st shooting angular range of the t-th LiDAR map and a (t_2)-nd shooting angular range of the t-th camera image.

7. The method of claim 5, wherein, in response to selecting the t-th object among the plurality of objects, the computing device instructs the display device to further display a detailed area in which at least one of a planar portion, a side portion, and a front portion of the t-th object is enlarged, wherein the computing device generates at least one (t_3)-rd annotation box in which at least one of a planar portion, a side portion and a front portion of the (t_1)-st annotation box is enlarged and instructs the display device to display the (t_3)-rd annotation box through the detailed area.

8. The method of claim 4, wherein, after the step (b4), the step of (b) includes steps of:
(b5) in response to selecting a (t+1)-th key frame, the computing device converting coordinates of the t-th annotation result, having been converted into coordinates of the t-th LiDAR map, into coordinates of the (t+1)-th LiDAR map, thereby generating a converted t-th annotation result, and then applying the converted t-th annotation result to the (t+1)-th LiDAR map, and instructing the display device to (1) display the (t+1)-th LiDAR map with the t-th annotation result applied thereto and (2) display the t-th annotation result on one or more (t+1)-th camera images by referring to a matching relation between the (t+1)-th LiDAR map and the (t+1)-th camera images;
(b6) the computing device allowing a (t+1)-th annotating process on said at least part of a plurality of objects included in the (t+1)-th LiDAR map to be performed by referring to at least one of the (t+1)-th LiDAR map and the (t+1)-th camera images; and
(b7) the computing device converting coordinates of a (t+1)-th annotation result into coordinates of the (t+1)-th LiDAR map, to thereby generate a converted (t+1)-th annotation result and record the converted (t+1)-th annotation result in the specific LiDAR map.

9. The method of claim 1, wherein, at the step of (a), the computing device generates the specific LiDAR map by applying a LiDAR SLAM algorithm to the plurality of specific LiDAR point cloud data.

10. The method of claim 1, wherein, at the step of (a), each of the specific LiDAR frames corresponding to each of the specific LiDAR point cloud data is associated with each of location information of the plurality of specific LiDAR frames, wherein the location information includes information on 6-DOF (6 degrees of freedom).

11. A computing device for annotation based on a LiDAR map, comprising:
at least one memory that stores instructions; and
at least one processor configured to execute the instructions to perform processes of: (I) on condition that each of datasets for each of driving routes has been recorded in a database, in response to acquiring a specific dataset among the datasets, generating a specific LiDAR map and a specific key frame trajectory using a plurality of specific LiDAR point cloud data included in the specific dataset, wherein each of the datasets includes (1) each of LiDAR point cloud data corresponding to each of LiDAR frames and (2) each of camera images corresponding to each of camera frames, acquired by a predetermined criterion while driving each of the driving routes; and (II) allowing a specific key frame, which is at least part of a plurality of key frames included in the specific key frame trajectory, to be annotated, thereby generating an annotation result and thus recording the annotation result in the specific LiDAR map.

12. The computing device of claim 11, wherein, at the process of (I), the processor selects at least part of a plurality of specific LiDAR frames as the plurality of key frames by referring to each location information of the plurality of specific LiDAR frames corresponding to the plurality of specific LiDAR point cloud data, and generates the key frame trajectory to be a path moving along the plurality of key frames.

13. The computing device of claim 12, wherein, at the process of (I), for each of the specific LiDAR frames, the processor performs at least one of sub-processes of: (i) determining whether a distance between a k-th point corresponding to a k-th specific LiDAR frame and a (k+1)-th point corresponding to a (k+1)-th specific LiDAR frame exceeds a preset threshold distance, and (ii) determining whether a pose change rate between a k-th pose corresponding to the k-th specific LiDAR frame and a (k+1)-th pose corresponding to the (k+1)-th specific LiDAR frame exceeds a present threshold pose change rate, to thereby select the plurality of key frames.

14. The computing device of claim 11, wherein the process of (II) includes processes of: (II-1) allowing a t-th key frame among the plurality of key frames that are part of the specific key frame trajectory to be selected as the specific key frame; (II-2) in response to selecting the t-th key frame, instructing a display device to display a t-th LiDAR map and one or more t-th camera images corresponding to location information of the t-th key frame; (II-3) allowing a t-th annotating process on said at least part of a plurality of objects included in the t-th LiDAR map to be performed by referring to at least one of the t-th LiDAR map and the t-th camera images; and (II-4) converting coordinates of a t-th annotation result into coordinates of the t-th LiDAR map, to thereby generate a converted t-th annotation result and record the converted t-th annotation result in the specific LiDAR map.

15. The computing device of Claim 14, wherein, at the process of (II-3), in response to selecting a t-th object among the plurality of objects, the processor generates a (t_1)-st annotation box with a certain range based on the t-th object, and then instructs the display device to display the (t_1)-st annotation box, to thereby allow the t-th annotating process on the t-th object to be performed.
